# EUROPÄISCHE PATENTSCHRIFT

(11) **EP 1 136 720 B1**
(45) Veröffentlichungstag und Bekanntmachung des Hinweises auf die Patenterteilung: **15.09.2004**
(21) Anmeldenummer: 01104003.7
(22) Anmeldetag: 20.02.2001
(51) Int. Cl.: F16F 9/32

(54) **Stossdämpferkolben, bestehend aus zwei Kolbenhälften**
Shock absorber piston made of two joined piston halves
Piston d'amortisseur de chocs, constitué de deux moitiés jointes

(30) Priorität: 18.03.2000 DE 10013638
(43) Veröffentlichungstag der Anmeldung: 26.09.2001
(73) Patentinhaber: ThyssenKrupp Bilstein GmbH, 58256 Ennepetal (DE)
(72) Erfinder: Pesch, Christoph, Dipl.-Ing., 53757 St. Augustin (DE); Drees, Helmut, Dipl.-Ing., 58256 Ennepetal (DE)

(56) Entgegenhaltungen:
- EP-A- 0 896 174
- GB-A- 2 072 798
- US-A- 3 814 445
- US-A- 4 497 102
- US-A- 4 635 909
- US-A- 4 749 202
- PATENT ABSTRACTS OF JAPAN vol. 1999, no. 05, 31. Mai 1999 (1999-05-31) & JP 11 037202 A (KAYABA IND CO LTD), 12. Februar 1999 (1999-02-12)

## Beschreibung

Die Erfindung beinhaltet einen Stoßdämpferkolben, bestehend aus zwei mit jeweils einer Stirnfläche axial aneinander liegenden Kolbenhälften nach dem Oberbegriff des Anspruchs 1.

Derartige Stoßdämpferkolben werden überwiegend aus Sintermaterial hergestellt und erfüllen die besonderen Anforderungen hinsichtlich Haltbarkeit und Regelbarkeit der Kolben bei Stoßdämpfern, insbesondere an Radaufhängungen für PKW's.

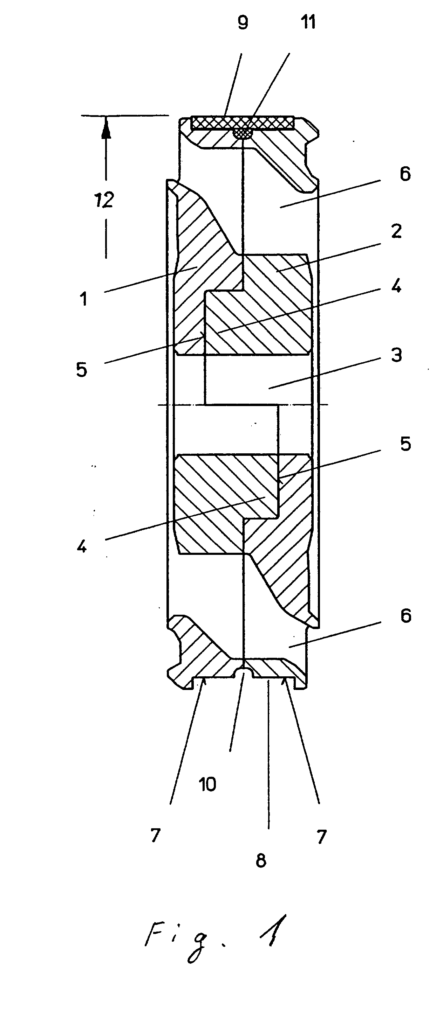

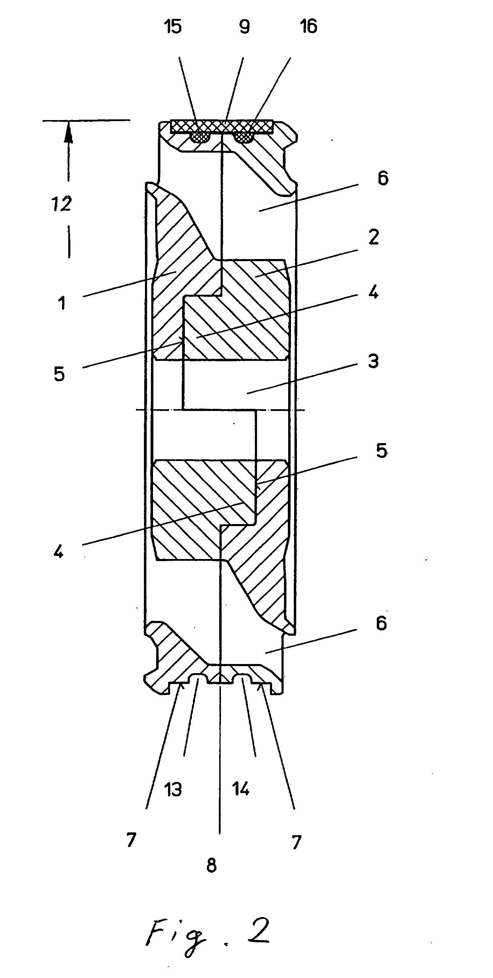

Ein solcher Stoßdämpferkolben ist aus der DE 37 01 557 A1 bekannt. Der hier gezeigte Stoßdämpferkolben ist direkt (Fig. 1 bis 6) oder über ein Verbindungsteil (Fig. 7 bis 11) am Ende einer Kolbenstange befestigbar. Die beiden Kolbenhälften weisen umfangsseitig zu den aneinander liegenden Stirnflächen hin zur Bildung einer umlaufenden Nut einen Rücksprung auf. Diese Nut trägt einen Kolbenring. Nachteilig, insbesondere bei Stoßdämpferkolben, die als Sinterteil oder Pressteil hergestellt werden, sind die die spätere Nut bildenden Rücksprünge besonders hinsichtlich ihres Durchmessers toleranzbehaftet. Insbesondere durch den Verschleiß der Sinter- bzw. Pressform ergibt sich eine unterschiedliche Durchmessertoleranz, abhängig von der Einsatzdauer des Herstellungswerkzeuges. Da sich diese Toleranz über den später in die Nut eingelegten Kolbenring auf den äußeren Arbeitsdurchmesser des Stoßdämpferkolbens auswirken würde, was ein Spiel oder eine Pressung zum Stoßdämpferrohr zur Folge hätte, ist es erforderlich, den Nutgrund mechanisch nachzubearbeiten, um die erforderliche geringere Toleranz zu erreichen.

Aus der GB-A-2 072 798 (Fig.7 sowie zugehörige Beschreibung Seite 3, rechte Spalte, Zeile 98 bis Seite 4, linke Spalte, Zeile 2) ist ein Stoßdämpferkolben nach dem Oberbegriff des Patentanspruchs 1 bekannt. Nachteilig bei diesem bekannten Kolben ist, dass die Kolbenhälften in ihrer Trennungsebene in radialer Richtung gegeneinander verschiebbar sind. Dadurch hält der Kolben im zusammengebauten Zustand, d.h. mit montiertem Kolbenring, nicht sicher zusammen und der Einbau des Kolbens in den Stoßdämpfer wird somit erschwert.

Der Erfindung liegt die Aufgabe zu Grunde, einen gattungsgemäßen Stoßdämpferkolben vorzuschlagen, der einfach zusammenbaubar ist und bei dem auf einfache Weise gewährleistet ist, dass beim Zusammenbau seine Kolbenhälften ohne weitere Maßnahmen sicher radial positioniert sind.

Diese Aufgabe wird erfindungsgemäß durch die Merkmale des Anspruchs 1 gelöst. Vorteilhafte Aus- und Weiterbildungen sind in den Ansprüchen 2 bis 6 beschrieben.

Die mit der Erfindung erzielten Vorteile bestehen insbesondere darin, dass der Stoßdämpferkolben ohne mechanische Nacharbeit direkt durch Sinterpressen oder sonstige spanlose Herstellungsverfahren hergestellt werden kann. Ein weiterer Vorteil liegt darin, dass der Stoßdämpferkolben nach der Erfindung nach dem Zusammenbau der Einzelteile ohne weitere Maßnahmen zusammenhält, bevor er am Ende der Kolbenstange befestigt wird. Durch die ineinander greifenden Vor- und Rücksprünge stützen sich die Kolbenhälften in radialer Richtung gegeneinander ab, so dass sie geometrisch zueinander definiert und zentriert sitzen und ohne weitere Maßnahmen im zusammengebauten Zustand von dem Kolbenring sicher zusammengehalten werden. Auf diese Weise wird der Einbau des Kolbens in den Stoßdämpfer erleichtert.

Ein Ausführungsbeispiel der Erfindung ist in der Zeichnung dargestellt und wird im Folgenden näher beschrieben. Es zeigen
- Fig. 1: den Schnitt durch einen Stoßdämpferkolben mit einem mittig eingesetzten Stützring und
- Fig. 2: den Schnitt durch einen Stoßdämpferkolben gemäß Fig. 1 mit zwei Stützringen.

Der in den Fig. 1 und 2 dargestellte Stoßdämpferkolben besteht aus zwei identischen Kolbenhälften 1, 2. Die Kolbenhälften 1, 2 weisen eine zentrische Bohrung 3 auf, durch die das Ende der nicht dargestellten Kolbenstange geschoben wird. Beide Kolbenhälften 1, 2 sind im Zentrum mit Vorsprüngen 4 ausgebildet, die jeweils in Rücksprünge 5 eingreifen. Diese Ausbildung gewährleistet, dass die Kolbenhälften 1, 2 derartig verdreht aufeinander liegen, dass die jeweils unterschiedlichen Querschnitte der Durchströmkanäle 6 in der gewünschten Weise voreinander liegen. Nicht dargestellte Federscheiben dienen zur wechselseitigen Abdichtung der Durchströmkanäle 6, wodurch die gewünschte Dämpfung in Druck- und/oder Zugrichtung erzielt wird.

Beide Kolbenhälften 1, 2 sind umfangsseitig zu den aneinander liegenden Stirnflächen hin mit einem Rücksprung 7 ausgebildet. Nach der Montage der Kolbenhälften 1, 2 bilden diese Rücksprünge 7 eine Nut 8. In diese Nut 8 wird ein Kolbenring 9 eingelegt. Im Ausführungsbeispiel ist der Kolbenring 9 ungeteilt ausgebildet. Er besteht aus einem geeigneten Kunststoff.

Der Innendurchmesser des Kolbenringes 9 ist geringfügig größer als der Durchmesser des Nutgrundes.

In Fig. 1 ist eine weitere Nut 10 im Bereich der Trennungsebene zwischen den Kolbenhälften 1 und 2 angeordnet. Diese Nut 10 erstreckt sich etwa hälftig über beide Kolbenhälften 1, 2. Die Nut 10 dient zur Aufnahme eines als O-Ring ausgebildeten Stützringes 11 aus elastisch nachgiebigem Material. Die Montage des Stoßdämpfers erfolgt derartig, dass der Stützring 11 auf eine Nuthälfte einer der Kolbenhälften 1 geschoben wird. Auf die andere Kolbenhälfte 2 wird der Kolbenring 9 aufgeschoben. Mit dem Zusammenschieben der Kolbenhälften 1, 2 erfolgt auch die Montage des Kolbenrings 9 und die Verquetschung des Stützrings 11 in der Nut 10. Diese Bauweise, verbunden mit der konstruktiv vorgegebenen Luft zwischen Nut 8 und Kolbenring 9, ermöglicht den erforderlichen Toleranzausgleich. Damit ist die Toleranz des Arbeitsdurchmessers 12 des Stoßdämpferkolbens nur noch vom Außenmaß des Kolbenrings 9 abhängig. Bei Ausbildung des Kolbenringes 9 mit einer axialen Trennstelle kann auch noch der Verschleiß am äußeren Durchmesser des Kolbenrings 9 ausgeglichen werden, da sich dieser Außendurchmesser durch den Andruck über den Stützring 11 dem Innendurchmesser des Stoßdämpferrohrs angleicht. Bei dieser Ausbildung mit einem Kolbenring 9, der eine Trennstelle am Durchmesser aufweist, wird auch ein Ausgleich der Toleranzen am Innendurchmesser des Stoßdämpferrohrs erreicht.

Die Ausbildung des Stoßdämpferkolbens entsprechend Fig. 2 unterscheidet sich nur geringfügig von der Ausbildung gemäß Fig. 1. Bei diesem Stoßdämpferkolben ist jeder Rücksprung 7 der jeweiligen Kolbenhälfte 1, 2 mit jeweils einer Nut 13, 14 versehen. In diese Nuten 13, 14 wird dann jeweils ein Stützring 15, 16 eingesetzt. Die Montage dieses Stoßdämpferkolbens erfolgt dann derartig, dass in die Nuten 13, 14 die Stützringe 15, 16 eingelegt werden und nach Überschieben des Kolbenrings 9 auf eine Kolbenhälfte 1 die andere Kolbenhälfte 2 eingeschoben wird. Auch eine Kombination von Nuten und Stützringen entsprechend Fig. 1 und 2, also mit beispielsweise drei Nuten und drei Stützringen, ist denkbar. Ebenso ist denkbar, dass ein flacher Stützring in eine langgezogene Nut eingelegt wird.

### Bezugszeichenliste

- 1.: Kolbenhälfte
- 2.: Kolbenhälfte
- 3.: Bohrung
- 4.: Vorsprung
- 5.: Rücksprung
- 6.: Durchströmkanal
- 7.: Rücksprung
- 8.: Nut
- 9.: Kolbenring
- 10.: Nut
- 11.: Stützring
- 12.: Arbeitsdurchmesser
- 13.: Nut
- 14.: Nut
- 15.: Stützring
- 16.: Stützring

## Patentansprüche

1. Stoßdämpferkolben, bestehend aus zwei mit jeweils einer Stirnfläche axial aneinander liegenden Kolbenhälften (1, 2), der direkt oder über ein Verbindungsteil am Ende einer Kolbenstange befestigbar ist, wobei beide Kolbenhälften (1, 2) umfangseitig zu den aneinander liegenden Stirnflächen hin zur Bildung einer umlaufenden Nut (8) einen Rücksprung (7) mit einem geringeren Durchmesser aufweisen und diese Nut (8) einen Kolbenring (9) trägt, und wobei zwischen Nutgrund und Kolbenring (9) wenigstens ein elastisch verformter oder verformbarer Stützring (11, 15, 16) angeordnet ist, **dadurch gekennzeichnet, dass** beide Kolbenhälften (1, 2) im Zentrum mit Vorsprüngen (4) ausgebildet sind, die jeweils in Rücksprünge (5) eingreifen.

2. Stoßdämpferkolben nach Anspruch 1, **dadurch gekennzeichnet, dass** als Stützring (11, 15, 16) ein O-Ring eingesetzt wird.

3. Stoßdämpferkolben nach Anspruch 1 oder Anspruch 2, **dadurch gekennzeichnet, dass** der Stützring (11)/die Stützringe (15, 16) in einer oder mehreren im Grund des Rücksprungs (7) angeordneten Nut (10, 13, 14), diese Nut (10)/Nuten (13, 14) überragend, liegt/liegen.

4. Stoßdämpferkolben nach Anspruch 3, **dadurch gekennzeichnet, dass** die Nut (10)/eine der Nuten auf der Trennungsebene der aneinander liegenden Kolbenhälften (1, 2) angeordnet ist und sich auf beide Kolbenhälften (1, 2) erstreckt.

5. Stoßdämpferkolben nach einem oder mehreren der Ansprüche 1 bis 4, **dadurch gekennzeichnet, dass** der Kolbenring (9) ungetrennt ausgebildet ist.

6. Stoßdämpferkolben nach einem oder mehreren der Ansprüche 1 bis 4, **dadurch gekennzeichnet, dass** bei einem getrennt ausgebildeten Kolbenring (9) die Trennstelle durch Kleben, Löten oder Schweißen geschlossen ist.

## Claims

1. Shock absorber piston consisting of two piston halves (1, 2) which each lie with a respective end face against the other in the axial direction, which shock absorber piston can be attached directly or via a connection part to the end of a piston rod, wherein on the peripheral side towards the end faces which lie against each other both piston halves (1, 2) have a smaller-diameter recess (7) to form a peripheral groove (8) and this groove (8) holds a piston ring (9), and wherein between the base of the groove and piston ring (9) at least one elastically deformed or deformable support ring (11, 15, 16) is disposed, **characterised in that** both piston halves (1, 2) are formed with projections (4) in the centre, which engage in respective recesses (5).

2. Shock absorber piston as claimed in claim 1, **characterised in that** an O-ring is inserted as the support ring (11, 15, 16).

3. Shock absorber piston as claimed in claim 1 or claim 2, **characterised in that** the support ring (11)/support rings (15, 16) lies/lie in one or a plurality of grooves (10, 13, 14) disposed in the base of the recess (7), protruding beyond this groove (10)/these grooves (13, 14).

4. Shock absorber piston as claimed in claim 3, **characterised in that** the groove (10)/one of the grooves is disposed on the plane of separation of the piston halves (1, 2) which lie against each other and extends onto both piston halves (1,2).

5. Shock absorber piston as claimed in any one or several of claims 1 to 4, **characterised in that** the piston ring (9) is formed in a non-split manner.

6. Shock absorber piston as claimed in any one or several of claims 1 to 4, **characterised in that** in the case of a split piston ring (9) the point of the split is closed by use of adhesive, soldering or welding.

## Revendications

1. Piston d'amortisseur constitué de deux demi pistons (1, 2) dont les surfaces frontales respectives sont disposées axialement l'une contre l'autre, et qui peut être fixé directement, ou par l'intermédiaire d'une pièce de raccordement, à l'extrémité d'une tige de piston, les deux demi-pistons (1, 2) présentant à leur périphérie et vers l'intérieur par rapport à leurs surfaces frontales situées l'une contre l'autre, un creux (7) de plus petit diamètre de manière à former une rainure périphérique (8), cette rainure (8) portant un segment de piston (9), au moins une bague d'appui (11, 15, 16) élastiquement déformée ou élastiquement déformable étant disposée entre le fond de la rainure et le segment de piston (9), **caractérisé en ce que** les deux demi-pistons (1, 2) sont configurés en leur centre avec des saillies (4) qui s'engagent chacune dans des creux (5).

2. Piston d'amortisseur selon la revendication 1, **caractérisé en ce que** l'on utilise un joint torique comme bague d'appui (11, 15, 16).

3. Piston d'amortisseur selon la revendication 1 ou la revendication 2, **caractérisé en ce que** la bague d'appui (11) et/ou les bagues d'appui (15, 16) sont situées dans une ou plusieurs rainures (10, 13, 14) disposées dans le fond du creux (7) et débordent de cette rainure (10) ou de ces rainures (13, 14).

4. Piston d'amortisseur selon la revendication 3, **caractérisé en ce que** la rainure (10) et/ou l'une des rainures sont disposées sur le plan qui sépare les demi-pistons (1, 2) situés l'un contre l'autre, et s'étend sur les deux demi-pistons (1, 2).

5. Piston d'amortisseur selon l'une ou plusieurs des revendications 1 à 4, **caractérisé en ce que** le segment de piston (9) est configuré d'un seul tenant.

6. Piston d'amortisseur selon l'une ou plusieurs des revendications 1 à 4, **caractérisé en ce que**, lorsque le segment de piston (9) est configuré en plusieurs pièces, le joint de séparation est fermé par collage, brasage ou soudage.
